# EUROPEAN PATENT SPECIFICATION

(11) **EP 1 931 022 B1**
(45) Date of publication and mention of the grant of the patent: **11.04.2018**
(21) Application number: 07023674.0
(22) Date of filing: 06.12.2007
(51) Int. Cl.: H02M 1/32, H02H 7/12, H02M 5/45

(54) **REFRIGERATING APPARATUS AND AN INVERTER DEVICE USED THEREIN**
KÜHLVORRICHTUNG UND DARIN VERWENDETER WECHSELRICHTER
APPAREIL DE RÉFRIGÉRATION ET DISPOSITIF D'ONDULEUR UTILISÉ PAR CELUI-CI

(30) Priority: 06.12.2006 JP 2006328935
(43) Date of publication of application: 11.06.2008
(73) Proprietor: Hitachi-Johnson Controls Air Conditioning, Inc., Tokyo 105-0022 (JP)
(72) Inventor: Oishi, Takashi, Shizuoka-shi Shizuoka-ken 424-0926 (JP); Ando, Tatsuo, Shizuoka-shi Shizuoka-ken 424-0926 (JP); Shinohara, Hiromichi, Shizuoka-shi Shizuoka-ken 424-0926 (JP); Kasahara, Rei, Shizuoka-shi Shizuoka-ken 424-0926 (JP); Kurita, Yoshiaki, Shizuoka-shi Shizuoka-ken 424-0926 (JP)
(74) Representative: Beetz & Partner mbB

(56) References cited:
- JP-A- 2004 286 239
- JP-A- 2006 280 016

## Description

### BACKGROUND OF THE INVENTION

The present invention relates to a refrigerating apparatus and an inverter device used therein. An inverter device as described in the preamble portion of patent claim 1 has been known from JP 2006 280016 A.

An air conditioner having a conventional electric motor control device forms an inverter with an IPM (Intelligent Power Module) or a driver circuit driving the IPM in order to drive the electric motor. In the case of an abnormal state when an overcurrent flows through the inverter or a control supply voltage drops for example, an inverter device protection function is undertaken to stop the inverter.

Even though the inverter device protection function was devised such that it is carried out in an abnormal state such as the generation of an overcurrent or the drop of a supply voltage, it sometimes started because of false detection by an overcurrent detection circuit which happens if switching noises of an inverter or a power circuit are overlapped with an overcurrent detection signal. When the protection function is actuated, the inverter device stops running. Although the protection function was actuated due to the false detection of an overcurrent, it is still difficult to identify or diagnose whether a failure in the IPM or the driver circuit has caused the inverter to stop. Needless to say, making such a decision takes time and labor.

JP 2006 280016 A discloses an inverter device having a converter for converting an AC to a DC, an inverter for converting the generated DC into an AC to variably drive an operating frequency of an electric motor, a current detection circuit for detecting a direct current flowing in the converter or the inverter, and a control circuit for controlling the converter or the inverter, the inverter device comprising: an overcurrent detection circuit for detecting an overcurrent if a direct current detected by the current detection circuit is not less than a set value; and first protection means built in the control circuit, for stopping the converter or the inverter if a direct current detected by the current detection circuit is not less than a second set value greater than the set value.

### SUMMARY OF THE INVENTION

In view of foregoing problems, it is, therefore, an object of the present invention to provide an inverter device with a protection mechanism for use in a refrigerating apparatus such as an air conditioner, a refrigerator, etc., so that if the protection mechanism stops the operation of the inverter, its cause is easily diagnosed.

To achieve the above-described objective, there is provided an inverter device having a converter for converting an AC to a DC, an inverter for converting the generated DC into an AC to variably drive an operating frequency of an electric motor, a current detection circuit for detecting a direct current flowing in the converter or the inverter, and a control circuit for controlling the converter or the inverter, the inverter device including: an overcurrent detection circuit for detecting an overcurrent if a direct current detected by the current detection circuit is not less than a set value; and first protection means built in the control circuit, for stopping the converter or the inverter if a direct current detected by the current detection circuit is not less than a second set value greater than the set value.

In the inverter device, the control circuit further includes a second protection means built in the control circuit, for stopping the converter or the inverter if a supply voltage of the circuit falls below a predetermined set value.

Further, in the inverter device, if the first or the second protection means is actuated while the overcurrent detection circuit is not in a detection enabling state, the control circuit transmits a signal indicating an erroneous operation of one of the protection means.

Further, it is preferable that if one of the protection means is actuated, the control circuit performs predetermined times of retrials on the inverter within a given time to decide whether the converter or the inverter has failed.

Another aspect of the present invention provides a refrigerating apparatus operating in a refrigeration cycle having an inverter device as described above, wherein the refrigeration cycle is controlled by a cycle control substrate.

In the inverter device, it is preferable that if one of the protection means is actuated, the cycle control substrate performs predetermined times of retrials on the inverter within a given time to decide whether the converter or the inverter has failed.

Therefore, the present invention inverter device for use in a refrigerating apparatus such as an air conditioner, a refrigerator, etc., is built in a manner to easily diagnose which causes the inverter to stop especially when the inverter stopped by its protection mechanism.

### BRIEF DESCRIPTION OF THE DRAWINGS

Fig. 1 is a diagram illustrating a refrigeration cycle of an air conditioner according to a first embodiment of the present invention;
Fig. 2 is a block diagram of an inverter device as an explanatory view of the first embodiment of the present invention; and
Fig. 3 is a flow chart describing diagnosis of the cause of actuating a protection function incorporated into the first embodiment of the present invention.

### DESCRIPTION OF SPECIFIC EMBODIMENTS

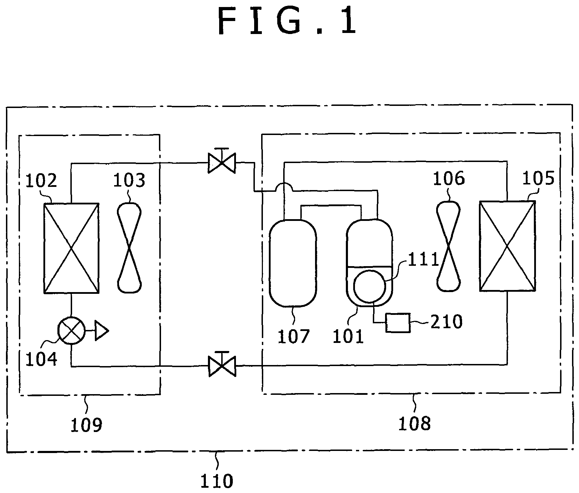

Hereinafter, preferred embodiments of the present invention will be set forth in detail with reference to Figs. 1 through 3.

An inverter device according to a first embodiment of the present invention is first explained with reference to Figs. 1 through 3.

Fig. 1 is a system diagram showing a refrigeration cycle of a refrigerating apparatus according to an embodiment of the invention, in which a compressor 101, an indoor heat exchanger 102, an indoor expansion valve 104, an outdoor heat exchanger 105, and an accumulator 107 are successively connected to circulate a refrigerant therethrough to form a refrigeration cycle. When an indoor area needs to be cooled, a refrigerant compressed by the compressor 101 is condensed and liquefied in the outdoor heat exchanger 105, reduced in pressure by the indoor expansion valve 104, evaporated by the indoor heat exchanger 102, and finally returned to the compressor 101. An indoor fan 103 expedites heat exchange in an indoor unit 109 and an outdoor fan 106 expedites heat exchange in an outdoor unit 108.

The compressor 101 is driven by an electric motor 111, of which operating frequency is variably controlled in relation to the capacity required for the refrigeration cycle, and the operating frequency is controlled by an inverter device 210.

In the refrigeration cycle, an opening degree of the indoor expansion valve 104, or an outdoor expansion valve (not shown), which serves to regulate the flow rate of the refrigerant, rotating speeds of the indoor fan 103 and the outdoor fan 106, a four-way valve (not shown) that switches over operating modes of cooling/heating, and the like, in addition to the rotating speed of the compressor 101, are controlled. An operation command signal issued by a remote controller that sets up an operating mode and temperature, temperature (discharged-gas temperature of the compressor, outside air temperature, heat-exchanger temperature, evaporating temperature, suction temperature, blow off temperature, freezing point, gas-pipe temperature, etc.) signals, and pressure (suction pressure and discharge pressure of the compressor) signals, etc. are inputted as information for the control into a cycle control substrate 250.

Moreover, an inverter demand frequency outputted from the cycle control substrate 250 is inputted via an interface connector 240, and an operating frequency and a motor operating current are outputted to the cycle control substrate 250 from the inverter device 210.

The inverter device 210 controls the refrigeration cycle as a detection signal and a command signal, which have been inputted into the cycle control substrate 250, are inputted into a microcomputer 231 via the interface connector 240. Also, the inverter device 210 controls other various control mechanisms (the outdoor expansion valve, the outdoor fan 106, the four-way valve to switch over the operating modes of cooling/heating).

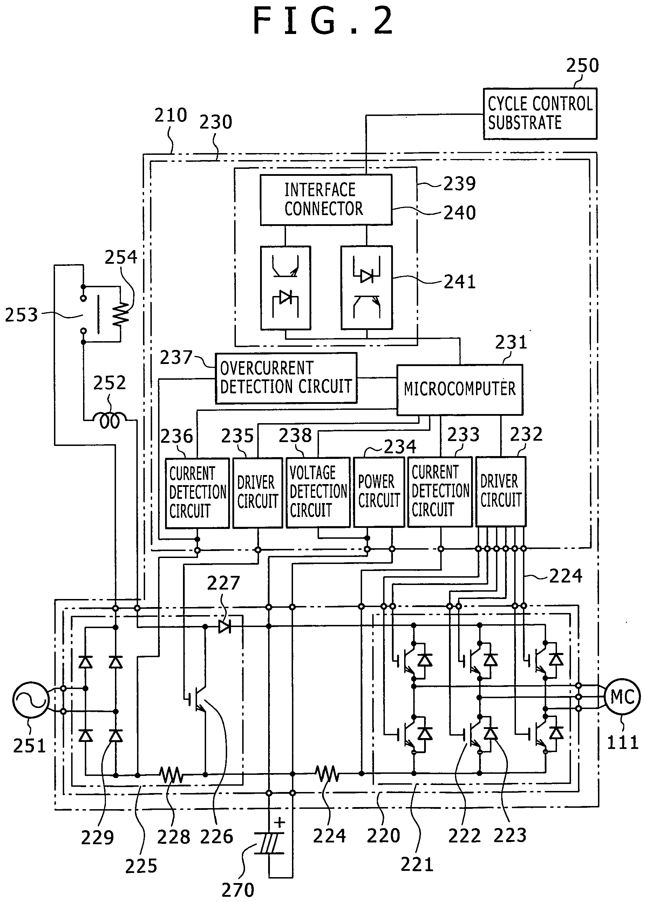

Fig. 2 shows a block diagram of the inverter device. The inverter device 210 includes a power element mount substrate 220 and an inverter control substrate 230. There are mounted on the power element mount substrate 220 a converter 225 converting an AC voltage from a single-phase AC power supply 251 into a direct current by using an active element, and an inverter 221 for converting the generated DC into an alternating current to drive the electric motor 111. There are mounted on the inverter control substrate 230 a power current detection circuit 236 having a shunt resistance 228 to detect a power current flowing in the converter 225, a DC detection circuit 233 having a shunt resistance 224 to detect DC flowing in the inverter 221, a DC voltage detection circuit 238 detecting a DC voltage generated in the converter 225, a microcomputer 231 controlling the converter 225 and the inverter 221, an inverter driver circuit 232 performing a switching operation on an inverter power semiconductor, a converter driver circuit 235 performing a switching operation on a converter power semiconductor, an overcurrent detection circuit 237 detecting an excessive overcurrent flowing in the converter 225, a communication circuit 239 communicating with the cycle control substrate 250, and a power circuit 234 supplying control power to the microcomputer 231, the current detection circuit 233 for inverter, the current detection circuit 236 for converter, the inverter driver circuit 232, the converter driver circuit 235, the overcurrent detection circuit 237 for converter, and the communication circuit 239.

An AC voltage from the single-phase AC power supply 251 is converted by the converter 225 (which is constituted of a circuit having plural rectifying elements 229 being bridge-connected and a step up chopper circuit having a switching element 226 and a first recovery diode 227, and which improves a supply power factor to suppress harmonics) into a DC current, and the inverter 221 (power conversion means, in which switching elements 222 are three-phase bridge-connected) being a DC/AC converter is controlled as AC frequency by the microcomputer 231 to drive the electric motor 111.

The AC voltage is rectified by the plural rectifying elements 229 in the converter 225 and reaches a smoothing capacitor 270 via a magnet contactor 253 which operates or stops the electric motor 111 built in the compressor 101, a power factor improvement reactor 252, the switching element 226, and the first recovery element 227.

In addition, a rush inhibition resistance 254 is provided in parallel to the magnet contactor 253, so that the magnet contactor 253, which closes at the time of power-on, may not be fused by an excessive rush current flowing through the smoothing capacitor 270. In the inverter 221, flying elements 223 are provided in parallel to the switching elements 222 so as to regenerate a counter-electromotive force that is generated when the switching elements 222 are switched.

A current supplied to the electric motor 111 is detected, by the shunt resistance 224, as a DC current flowing in the inverter power semiconductor, amplified by the current detection circuit 233 to be taken into the microcomputer 231, and reproduced, by the microcomputer 231, as a sine wave AC current, which is outputted to the electric motor, to be monitored.

Also, a current inputted from the single-phase AC power supply 251 is detected as a DC current by the shunt resistance 228 for converter, detected by the current detection circuit 236 for converter to be taken into the microcomputer 231, and monitored by the microcomputer 231. In addition, the current inputted from the single-phase AC power supply 251 is detected as a DC current by the shunt resistance 228 for converter, detected by the overcurrent detection circuit 237 for converter, and monitored by the microcomputer 231.

The inverter driver circuit 232 is provided between the microcomputer 231 and the switching elements 222 to amplify a weak signal from the microcomputer 231 to a level where the switching elements 222 can be driven. Further, the converter driver circuit 235 is provided between the microcomputer 231 and the active switching element 226 to amplify a weak signal from the microcomputer 231, to a level where the switching element 226 can be driven.

The communication circuit 239 is constituted of an inter face connector 240, into which a signal from the cycle control substrate 250 is inputted, and a photo-coupler 241 that transmits the input signal as an optical signal to the microcomputer 231. It makes transmission and reception in a state where electric isolation is established.

Some of a DC current generated by the converter 225 is regulated to a control power of 5V or 15V or so from high voltage, and supplied to the microcomputer 231, the current detection circuit 233 for inverter, the current detection circuit 236 for converter, the inverter driver circuit 232, the converter driver circuit 235, the overcurrent detection circuit 237 for converter, the voltage detection circuit 238, and the communication circuit 241, respectively.

IPM (Intelligent Power Module) converts an input direct current into an alternating current and changes the operating frequency of the electric motor at variable speeds. In addition, the inverter device 210 has an overcurrent protection function of the inverter 221 and an inverter protection function that stops the inverter 221 at a control supply voltage drop. When one of the protection functions is actuated, an abnormality signal is outputted to the microcomputer to stop the inverter 221. The inverter stops operating under the control of the driver circuit 232 as a pulse signal from the driver circuit 232 to the inverter 221 is stopped.

The current detection circuit 236 detects direct current flowing through the shunt resistance 228 for converter, and the current value is always inputted to the microcomputer 231. When the detected current obtained by the current detection circuit 236 reaches a predetermined allowable overcurrent value, the microcomputer 231 transmits to the overcurrent detection circuit 237 an overcurrent detection enabling signal to permit the detection of an overcurrent. If the current flowing through the current detection circuit 236 reaches an overcurrent set value greater than the allowable overcurrent value, the overcurrent detection circuit 237 decides that an overcurrent flew and transmits an overcurrent signal to the microcomputer 231. Upon receiving the overcurrent signal, the microcomputer 231 actuates the overcurrent protection function to stop the inverter 221.

As described above, the current flowing in the converter is monitored to detect overcurrent conditions. Similarly, a current flowing in the inverter can be monitored to detect the presence of an overcurrent. That is to say, it is possible to monitor a current flowing in the shunt resistance 224 to check whether an overcurrent is flowing. When the value of a monitored current flowing through the shunt resistance 224 is greater than a predetermined current value, a signal for validating the overcurrent detection is transmitted to an overcurrent detection circuit (not shown). It is also possible that, in a state where the overcurrent detection is valid, if the value of a current flowing through the shunt resistance 224 is greater than the predetermined set value, the overcurrent detection circuit then acknowledges the presence of an overcurrent condition.

Further, the current detection circuit or the overcurrent detection circuit may be built in the converter 225 or the IPM 221 to carry out the overcurrent detection. With this configuration, in the case of detecting an overcurrent, an abnormality signal is transmitted to the microcomputer 231 and the microcomputer 231 then actuates the protection function to stop the inverter 221.

When an abnormality signal indicating that the inverter device has stopped is transmitted to the microcomputer 231, the microcomputer 231 transmits to the cycle control substrate an ACK signal to indicate its reception of the abnormality signal. Then, the cycle control substrate retries the inverter device several times to decide whether the inverter device has failed. If the protection function of the inverter device is still actuated after the retries are done up to a predetermined number of times, the cycle control substrate confirms the failure in the inverter device.

Meanwhile, when the protection function is actuated and the inverter stops although the microcomputer has not outputted an overcurrent detection enabling signal and the overcurrent detection is invalid, the cycle control substrate may decide that the protection function was actuated in response to a drop in supply voltage of the power circuit 234, thereby causing the inverter to eventually stop. Similarly, when the converter 225 or the IPM has a built-in current detection circuit or overcurrent detection circuit so that an abnormality signal is outputted from the IPM or the driver circuit to the microcomputer, the cycle control substrate may decide that the protection function was actuated in response to a drop in supply voltage of the power circuit 234, thereby causing the inverter to eventually stop.

In general, a drop in control power-supply voltage occurs if the control power supply circuit has a defect, or the control power supply is loaded over an energy-limiting level, or the lifespan of an electrolytic capacitor used as the control power supply reaches the end, etc.

Moreover, suppose that the microcomputer outputted an overcurrent detection enabling signal and thus the overcurrent detection became valid, but the value of a detected current obtained by the current detection circuit 236 is yet below the predetermined overcurrent set value. Nevertheless, if the protection function is actuated and the inverter 221 stops, this is false detection of an overcurrent and an erroneous operation of the protection function.

Likewise, suppose that the converter 225 or the IPM has a built-in current detection circuit or overcurrent detection circuit and that an abnormality signal is outputted from the IPM. If the protection function is actuated, this is again false detection of an overcurrent and an erroneous operation of the protection function. The microcomputer diagnoses the cause of the actuation of the protection function to stop the inverter, and transmits a cause-indicating signal to the cycle control substrate.

Upon receiving the signal that indicates what caused the inverter to stop, the cycle control substrate performs a retry on the inverter device. Whether the IPM has failed can be diagnosed by observing when an abnormality is issued within a predetermined period of time. For example, if the retries are done eight times within 30 minutes and if an abnormality signal is outputted eight times in a row during the retries, the cycle control substrate decides that the IMP of the inverter device has failed.

When a retry is done, the erroneous operation in the protection function, or the actuation of the protection function due to the supply voltage drop, or the transmission of an abnormality signal to the microcomputer is not likely to occur several times in a row. The erroneous operation in the protection function occurs instantaneously like noises or thunder, i.e., in an intermittent manner. Further, a drop in power supply voltage is rather a temporal phenomenon that occurs when an actuator for another valve or fan is loaded over an energy limiting level. Even if an abnormality signal may be issued because of the erroneous operation of the protection function or the power supply voltage drop, the present invention is less likely to ascribe such incidence to the failure in the IPM and so forth of the inverter device.

Also, when the current protection function is actuated against an overcurrent, the cycle control substrate lowers the frequency of the inverter to thus subside the overcurrent state.

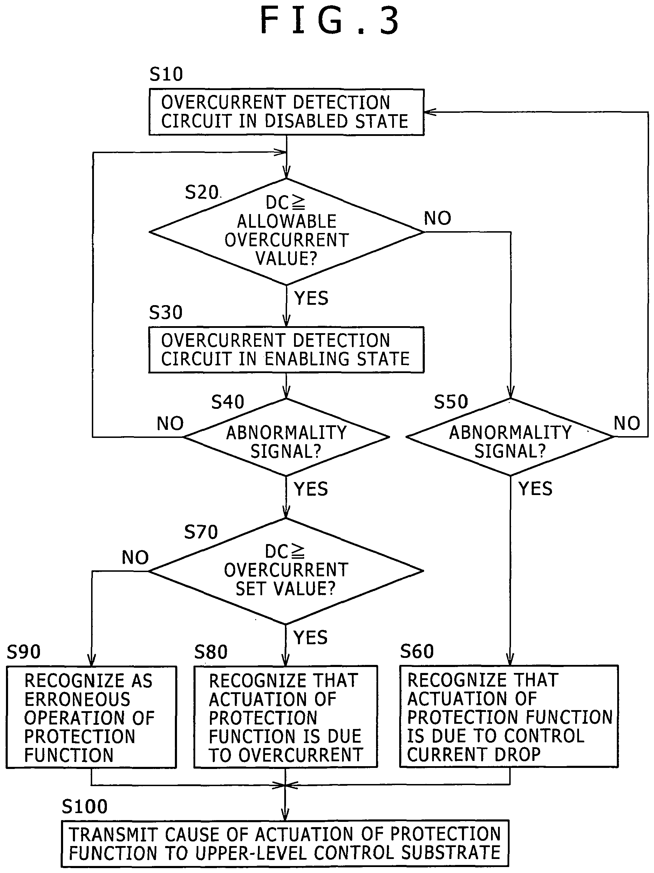

Fig. 3 shows a flow chart for explaining how to diagnose the cause of the actuation of the protection function to stop the inverter 221. In normal operation mode (S10), overcurrent detection of the overcurrent detection circuit is in invalid state. In the normal operation mode, the current detection circuit always inputs a direct current to the microcomputer, and the microcomputer compares the value of the input current with a predetermined allowable overcurrent value (S20). If the value of the input current is lower than the allowable overcurrent value and if the IPM does not output an abnormality signal, the inverter usually returns to the normal operation mode.

If the IPM outputs an abnormality signal (S50), it does not indicate an overcurrent state but indicates a drop in power supply voltage so that the protection function is actuated because of that. The microcomputer also recognizes this as a voltage shortage caused by a drop in power supply voltage (S60), and transmits to the cycle control substrate a signal indicating that the protection has been actuated because of the supply voltage drop and the inverter has stopped accordingly (S100).

If the input direct current is not lower than the allowable overcurrent value (S20), the microcomputer transmits to the overcurrent detection circuit a signal to validate the detection performed in the overcurrent detection circuit (S30). Then, the overcurrent detection circuit carries out the detection of an overcurrent and the microcomputer monitors if an abnormality signal is outputted from the IPM (S40). If the abnormality signal is outputted in step S40, the microcomputer compares the value of the detected direct current obtained by the DC detection circuit with the overcurrent set value (S60). If the value of the detected direct current is not lower than the overcurrent set value, it means an overcurrent is detected in use of both the overcurrent detection circuit and the DC detection circuit. Hence, the microcomputer recognizes that the protection function must have been actuated due to the overcurrent, and transmits to the cycle control substrate a signal indicating what caused the inverter to stop (S100).

On the other hand, if the value of the detected direct current is less than the overcurrent set value (S70), it is believed that the overcurrent detection circuit or the IPM has an error to output such an abnormality signal. Thus, the microcomputer recognizes this incidence as an erroneous operation of the protection function (S90), and transmits to the cycle control substrate a signal indicating what caused the inverter to stop (S100). Upon receiving each of the signals indicating why the inverter has stopped, the cycle control substrate performs retries on the inverter device and observes how many times an abnormality signal is outputted within a predetermined amount of time to diagnose failure in the IPM, etc.

Although the IPM is designed to have the overcurrent protection function or the protection function against the drop in control power supply voltage, if the IPM is not equipped with the protection function, the driver circuit that drives the IPM may have the protection function instead.

Moreover, the DC detection circuit can be effectively used for detecting not only a direct current but also a motor current. That is, a motor current detection circuit (not shown) detects a motor current having been detected by a current sensor, and the microcomputer compares the detected current with an overcurrent set value, so as to diagnose an overcurrent state.

According to the present invention explained so far, the cause of the actuation of the inverter protection function can be identified because the overcurrent detection is carried out only if an overcurrent detection enabling signal is issued to the overcurrent detection circuit. In addition, if an overcurrent is generated in case of failure or trouble in the compressor or in case of power element failure in the inverter device, it is necessary to protect the inverter device. Therefore, the abnormality of the inverter device is ascribed to the overcurrent state, and a repair service can be done with easiness simply by identifying failure or a problematic area.

Meanwhile, other protection functions against a control power voltage drop or an erroneous operation, both unlikely to occur, are actuated rather accidentally in the case of a temporal load concentration on the control power supply or because of noises being generated during an operation of the actuator or the inverter. Therefore, with a retry or a restart of the inverter, it is no longer necessary to exchange the entire substrate simply because the protection function of the inverter circuit has been actuated without the presence of an overcurrent state.

Needless to say, it will be the best if a product is manufactured not to experience any drops in control supply power or erroneous operations. Also, it is usually difficult to diagnose, during new product development and test, what conditions actuated the inverter circuit protection function or whether an overcurrent is flowing without the aid of a meter or the like. However, the present invention makes it easy to analyze the actuation of the inverter circuit protection by introducing it even to the development and test phases.

## Claims

1. An inverter device (210) having a converter (225) for converting an AC to a DC, an inverter (221) for converting the generated DC into an AC to variably drive an operating frequency of an electric motor, a current detection circuit (233) for detecting a direct current flowing in the converter (225) or the inverter (221), and a control circuit for controlling the converter (225) or the inverter (221), the inverter device (210) comprising:
an overcurrent detection circuit (237) for detecting an overcurrent if a direct current detected by the current detection circuit (233) is not less than a set value; and
first protection means (231) built in the control circuit, for stopping the converter (225) or the inverter (221) if a direct current detected by the current detection circuit (233) is not less than a second set value greater than the set value,
**characterized in that**
the control circuit further includes second protection means built in the control circuit, for stopping the converter (225) or the inverter (221) if a supply voltage (234) of the control circuit falls below a predetermined set value,
wherein if the first or the second protection means is actuated while the overcurrent detection circuit (237) is not in a detection enabling state, the control circuit transmits a signal indicating an erroneous operation of one of the protection means.

2. The inverter device according to claim 1, wherein if either one of the protection means is actuated, the control circuit performs a predetermined times of retrials on the inverter (221) within a given time to decide whether the converter (225) or the inverter (221) has failed.

3. A refrigerating apparatus operating in a refrigeration cycle having an inverter device (210) according to claim 1,
wherein the refrigeration cycle is controlled by a cycle control substrate.

4. The refrigerating apparatus according to claim 3, wherein if one of the protection means is actuated, the cycle control substrate performs predetermined times of retrials on the inverter within a given time to decide whether the converter or the inverter has failed.

## Patentansprüche

1. Wechselrichtervorrichtung (210) mit einem Wandler (225) zum Umwandeln eines Wechselstroms in einen Gleichstrom, einem Wechselrichter (221) zum Umwandeln des erzeugten Gleichstroms in einen Wechselstrom, um eine Betriebsfrequenz eines Elektromotors veränderbar zu steuern, einem Stromerfassungsschaltkreis (233) zum Erfassen eines Gleichstroms, der in den Wandler (225) oder in den Wechselrichter (221) fließt, und einem Steuerschaltkreis zum Steuern des Wandlers (225) oder des Wechselrichters (221), wobei die Wechselrichtervorrichtung (210) aufweist:
eine Überstromerfassungsschaltung (237) zum Erfassen eines Überstroms, wenn ein von dem Stromerfassungsschaltkreis (233) erfasster Gleichstrom nicht kleiner ist als ein festgelegter Wert und
erste Schutzmittel (231), die in den Steuerschaltkreis eingebaut sind, um den Wandler (225) oder den Wechselrichter (221) zu stoppen, wenn ein von dem Stromerfassungsschaltkreis (233) erfasster Gleichstrom nicht kleiner ist als ein zweiter festgelegter Wert, der größer ist als der festgelegte Wert,
**dadurch gekennzeichnet, dass**
der Steuerschaltkreis ferner zweite Schutzmittel aufweist, die in den Steuerschaltkreis eingebaut sind zum Stoppen des Wandlers (225) oder des Wechselrichters (221), wenn eine Versorgungsspannung (234) des Steuerschaltkreises unter einen vorbestimmten festen Wert fällt,
wobei, wenn die ersten oder die zweiten Schutzmittel betätigt werden, während der Überstromerfassungsschaltkreis (237) sich nicht in einem erfassungsfähigen Zustand befindet, der Steuerschaltkreis ein Signal übermittelt, welches einen fehlerhaften Betrieb eines der Schutzmittel anzeigt.

2. Wechselrichtervorrichtung nach Anspruch 1, wobei, wenn jedes der Schutzmittel in Betrieb ist, der Steuerschaltkreis eine vorbestimmte Anzahl nochmaliger Prüfungen an dem Wechselrichter (221) innerhalb einer gegebenen Zeit ausführt, um zu entscheiden, ob der Wandler (225) oder der Wechselrichter (221) versagt hat.

3. Kühlgerät, welches in einem Kühlzyklus arbeitet, bei dem eine Wechselrichtervorrichtung (210) nach Anspruch 1 verwendet wird, wobei der Kühlzyklus durch ein Zyklussteuersubstrat gesteuert wird.

4. Kühlgerät nach Anspruch 3, wobei, wenn eines der Schutzmittel in Betrieb genommen wurde, das Zyklussteuersubstrat eine vorbestimmte Anzahl an nochmaligen Prüfungen des Wechselrichters innerhalb einer gegebenen Zeit ausführt, um zu entscheiden, ob der Wandler oder der Wechselrichter versagt hat.

## Revendications

1. Dispositif inverseur (210) ayant un convertisseur (225) pour convertir un CA en un CC, un inverseur (221) pour convertir le CC généré en un CA pour piloter de manière variable une fréquence opérationnelle d'un moteur électrique, un circuit (233) de détection de courant pour détecter un courant continu passant dans le convertisseur (225) ou l'inverseur (221), et un circuit de commande pour commander le convertisseur (225) ou l'inverseur (221), le dispositif inverseur (210) comprenant :
un circuit (237) de détection de surintensité pour détecter une surintensité si un courant continu détecté par le circuit (233) de détection de courant n'est pas inférieur à une valeur fixée ; et
un premier moyen (231) de protection intégré dans le circuit de commande, pour stopper le convertisseur (225) ou l'inverseur (221) si un courant continu détecté par le circuit (233) de détection de courant n'est pas inférieur à une deuxième valeur fixée supérieure à la valeur fixée,
**caractérisé en ce que**
le circuit de commande inclut en outre un deuxième moyen de protection intégré dans le circuit de commande, pour stopper le convertisseur (225) ou l'inverseur (221) si une tension d'alimentation (234) du circuit de commande tombe en-dessous d'une valeur fixée prédéterminée,
dans lequel, si le premier ou le deuxième moyen de protection est actionné tandis que le circuit (237) de détection de surintensité n'est pas dans un état d'activation de détection, le circuit de commande transmet un signal indiquant une opération erronée de l'un des moyens de protection.

2. Dispositif inverseur selon la revendication 1, dans lequel, si l'un ou l'autre des moyens de protection est actionné, le circuit de commande exécute un nombre de fois prédéterminé de nouvelles tentatives sur l'inverseur (221) au sein d'une durée donnée pour décider si le convertisseur (225) ou l'inverseur (221) est défaillant.

3. Appareil de réfrigération fonctionnant dans un cycle de réfrigération ayant un dispositif inverseur (210) selon la revendication 1,
dans lequel le cycle de réfrigération est commandé par un substrat de commande de cycle.

4. Appareil de réfrigération selon la revendication 3, dans lequel, si un des moyens de protection est actionné, le substrat de commande de cycle exécute un nombre de fois prédéterminé de nouvelles tentatives sur l'inverseur au sein d'une durée donnée pour décider si le convertisseur ou l'inverseur est défaillant.
